# DEMANDE DE BREVET EUROPEEN

(11) **EP 2 759 448 A2**
(43) Date de publication de la demande: **30.07.2014**
(21) Numéro de dépôt: 14152553.5
(22) Date de dépôt: 24.01.2014
(51) Int. Cl.: B60R 13/08, F02F 7/00, F02B 77/13

(54) **Dispositif de fixation d'un panneau de protection acoustique sur un moteur de véhicule automobile**

(30) Priorité: 28.01.2013 FR 1350710
(71) Demandeur: CENTRE D'ETUDE ET DE RECHERCHE POUR L'AUTOMOBILE (CERA), 51100 Reims (FR)
(72) Inventeur: Martins, Carlos, 51150 Tours sur Marne (FR)
(74) Mandataire: Sayettat, Julien Christian

(57) **Abrégé**

L'invention concerne un dispositif (1) de fixation d'un panneau (2) de protection acoustique sur un moteur de véhicule automobile solidaire d'une tige (5) d'ancrage dont l'extrémité libre présente un embout (6), ledit dispositif comprenant : un embouti (7) réalisé dans l'épaisseur dudit panneau et s'inscrivant sensiblement dans l'épaisseur générale dudit panneau, le fond dudit embouti étant pourvu d'un orifice (8) ; un plot (9) élastique de découplage comprenant un tronc (10) vertical de section horizontale inférieure à celle dudit embouti au niveau de ladite face supérieure, l'extrémité supérieure dudit plot étant pourvue d'une collerette (11), l'extrémité inférieure dudit plot étant pourvue d'un logement (12) agencé pour pouvoir recevoir ledit embout en emboîtement, ledit tronc comprenant une zone d'ancrage (13) par rapport audit panneau ; une pièce (14) de rigidification en matériau thermoplastique moulé, ladite pièce comprenant une partie tubulaire (15) logeant une zone inférieure (16) dudit tronc et saillante dudit panneau vers le bas, l'intérieur de ladite partie tubulaire comprenant une zone d'ancrage réciproque (17), l'extérieur de ladite partie tubulaire comprenant une zone d'emboitement (18) sur la périphérie dudit orifice.

## Description

L'invention concerne un dispositif de fixation d'un panneau de protection acoustique sur un moteur de véhicule automobile et un écran de protection comprenant un tel panneau et au moins un tel dispositif.

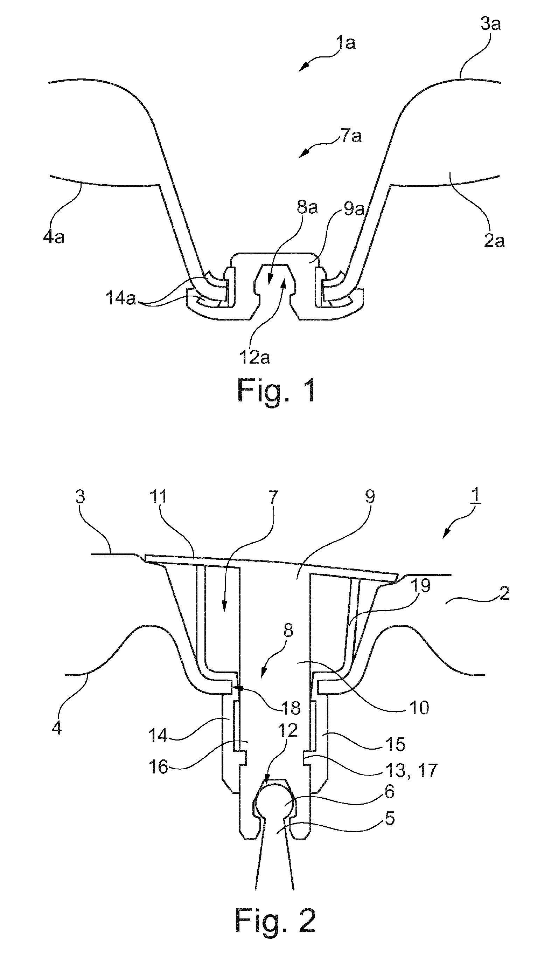

En relation avec la figure 1, il est connu de réaliser un dispositif de fixation 1a d'un panneau 2a de protection acoustique - ledit panneau étant notamment à base de feutre de verre avec liant obtenu par compression à chaud, ou bien à base de mousse de polyuréthanne - sur un moteur de véhicule automobile, ledit panneau présentant une face supérieure 3a et une face inférieure 4a, ledit moteur étant solidaire d'une tige verticale saillant vers le haut d'ancrage dudit dispositif, l'extrémité libre de ladite tige présentant un embout de réception dudit dispositif, ledit dispositif comprenant :
- un embouti 7a réalisé dans l'épaisseur dudit panneau du côté de ladite face supérieure de manière à réduire localement son épaisseur, ledit embouti créant un bossage du côté de ladite face inférieure, de manière à permettre un écartement entre ladite face inférieur et ledit moteur afin d'éviter une surchauffe dudit panneau, le fond dudit embouti étant pourvu d'un orifice 8a,
- un plot 9a élastique de découplage monté au fond de l'embouti dans ledit orifice, ledit plot étant pourvue d'un logement 12a débouchant vers le bas agencé pour pouvoir recevoir ledit embout en emboîtement,
- un oeillet 14a de renfort en matériau thermoplastique moulé, ledit oeillet s'emboitant dans ledit orifice pour former pièce de rigidification consolidant la périphérie dudit orifice et recevant en emboitement ledit plot.

Avec un tel agencement, on observe notamment les inconvénients suivants :
- une esthétique dégradée du fait de la visibilité de l'embouti et de la présence du plot et de l'oeillet au fond dudit embouti,
- le risque de remplissage de l'embouti par un fluide, tel que de l'eau ou de l'huile, renversé involontairement sur le panneau,
- le fait que l'embouti crée un bossage du côté de la face inférieure du panneau confère à ce dernier une enveloppe volumique importante empêchant une optimisation de la logistique lorsque l'on empile une pluralité de panneaux les uns sur les autres pour les transporter, puisque cela minimise le nombre de panneaux pouvant être mis dans un volume donné.

L'invention a pour but de pallier ces inconvénients.

A cet effet, et selon un premier aspect, l'invention propose un dispositif de fixation d'un panneau de protection acoustique sur un moteur de véhicule automobile, ledit panneau présentant une face supérieure et une face inférieure, ledit moteur étant solidaire d'une tige verticale saillant vers le haut d'ancrage dudit dispositif, l'extrémité libre de ladite tige présentant un embout de réception dudit dispositif, ledit dispositif comprenant :
- un embouti réalisé dans l'épaisseur dudit panneau du côté de ladite face supérieure de manière à réduire localement son épaisseur, ledit embouti s'inscrivant sensiblement dans l'épaisseur générale dudit panneau de façon à ne pas créer de bossage du côté de ladite face inférieure, le fond dudit embouti étant pourvu d'un orifice,
- un plot élastique de découplage comprenant un tronc vertical de section horizontale inférieure à celle dudit embouti au niveau de ladite face supérieure, l'extrémité supérieure dudit plot étant pourvue d'une collerette de masquage disposée sensiblement en continuité avec ladite face supérieure de façon à masquer ledit embouti, l'extrémité inférieure dudit plot étant pourvue d'un logement agencé pour pouvoir recevoir ledit embout en emboîtement, ledit tronc comprenant une zone d'ancrage par rapport audit panneau,
- une pièce de rigidification en matériau thermoplastique moulé, ladite pièce comprenant une partie tubulaire logeant une zone inférieure dudit tronc et saillante dudit panneau vers le bas, de manière à écarter ledit logement dudit panneau, l'intérieur de ladite partie tubulaire comprenant une zone d'ancrage réciproque coopérant en emboîtement avec ladite zone d'ancrage pour ancrer ledit plot sur ladite pièce, l'extérieur de ladite partie tubulaire comprenant une zone d'emboitement sur la périphérie dudit orifice.

Dans cette description, les termes de positionnement dans l'espace (haut, bas, supérieur, inférieur, vertical, horizontal, ...) sont pris en référence au dispositif disposé dans le véhicule.

Avec l'agencement proposé :
- l'esthétique est améliorée du fait du masquage de l'embouti par la collerette,
- le risque de remplissage de l'embouti par un fluide est supprimé du fait de la présence de la collerette,
- on supprime le bossage du côté de la face inférieure du panneau, ce qui permet d'optimiser la logistique de transport d'une pluralité de panneaux empilés les uns sur les autres.

Selon un deuxième aspect, l'invention propose un écran de protection comprenant un panneau et au moins un dispositif de fixation.

D'autres particularités et avantages de l'invention apparaîtront dans la description qui suit, faite en référence aux figures jointes, dans lesquelles :
- la figure 1 est une vue en coupe verticale d'un dispositif selon une réalisation de l'art antérieur (les différents composants sont repérés par la numérotation employée pour leurs homologues dans les réalisations de l'invention, ladite numérotation étant suivie de l'indice « a »),
- la figure 2 est une vue en coupe verticale d'un dispositif selon une première réalisation, ledit dispositif étant représenté emboité sur une tige,
- la figure 3 est une vue en coupe verticale d'un dispositif selon une deuxième réalisation,
- les figures 4 sont des vues en coupe verticale (4a) et en perspective partielle ajourée (4b) d'un dispositif selon une troisième réalisation.

En référence aux figures, on décrit un dispositif 1 de fixation d'un panneau 2 de protection acoustique sur un moteur de véhicule automobile, ledit panneau présentant une face supérieure 3 et une face inférieure 4, ledit moteur étant solidaire d'une tige 5 verticale saillant vers le haut d'ancrage dudit dispositif, l'extrémité libre de ladite tige présentant un embout 6 - ici sous forme de bourrelet - de réception dudit dispositif, ledit dispositif comprenant :
- un embouti 7 réalisé dans l'épaisseur dudit panneau du côté de ladite face supérieure de manière à réduire localement son épaisseur, ledit embouti s'inscrivant sensiblement dans l'épaisseur générale dudit panneau de façon à ne pas créer de bossage du côté de ladite face inférieure, le fond dudit embouti étant pourvu d'un orifice 8 - notamment circulaire -,
- un plot 9 élastique de découplage - notamment en caoutchouc - comprenant un tronc 10 vertical de section horizontale inférieure à celle dudit embouti au niveau de ladite face supérieure, l'extrémité supérieure dudit plot étant pourvue d'une collerette 11 de masquage disposée sensiblement en continuité avec ladite face supérieure de façon à masquer ledit embouti, l'extrémité inférieure dudit plot étant pourvue d'un logement 12 agencé pour pouvoir recevoir ledit embout en emboîtement, ledit tronc comprenant une zone d'ancrage 13 par rapport audit panneau,
- une pièce 14 de rigidification en matériau thermoplastique moulé, ladite pièce comprenant une partie tubulaire 15 logeant une zone inférieure 16 dudit tronc et saillante dudit panneau vers le bas, de manière à écarter ledit logement dudit panneau, l'intérieur de ladite partie tubulaire comprenant une zone d'ancrage réciproque 17 coopérant en emboîtement avec ladite zone d'ancrage pour ancrer ledit plot sur ladite pièce, l'extérieur de ladite partie tubulaire comprenant une zone d'emboitement 18 sur la périphérie dudit orifice.

Selon les réalisations représentées, le dispositif 1 comprend en outre un moyen de soutien 19 de la collerette 11 destiné à éviter son affaissement dans l'embouti 7.

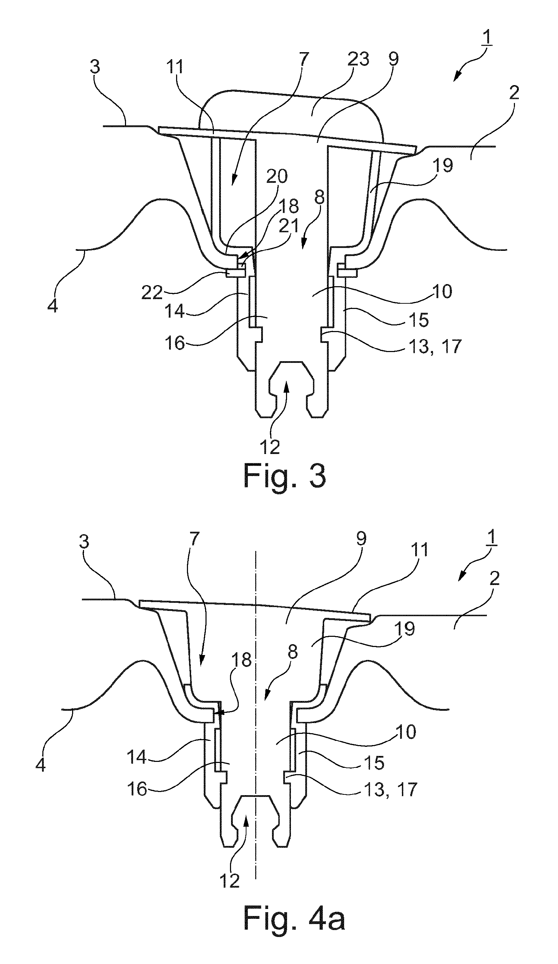

Selon les réalisations représentées en figures 2 et 3, le moyen de soutien 19 est intégré à la pièce 14 de rigidification, étant ici sous la forme d'un conduit élargi prolongeant le haut de la partie tubulaire 15 pour venir en contact avec la collerette 11.

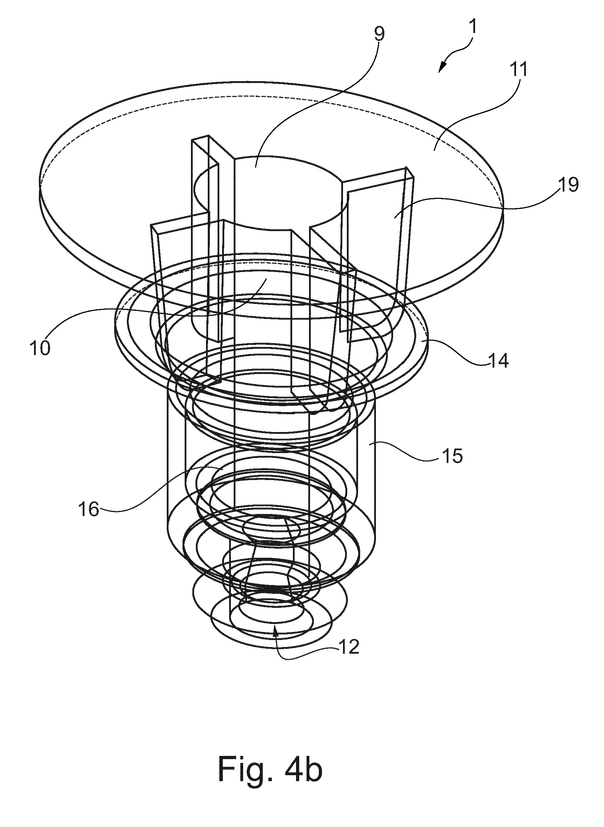

Selon la réalisation représentée en figures 4, le moyen de soutien 19 est intégré au plot 9, étant ici sous la forme de nervures verticales s'étendant en dessous de la collerette 11 pour prendre appui sur la pièce 14 de rigidification.

Selon les réalisations représentées en figures 2 et 4, la zone d'emboitement 18 est sous forme d'une rainure circulaire recevant la périphérie de l'orifice 8.

Selon la réalisation représentée en figure 3, la zone d'emboitement 18 est sous forme d'une surface d'appui de la périphérie de l'orifice 8 surmontée par une butée supérieure 20, la partie tubulaire 15 étant pourvue d'une gorge 21 périphérique, une rondelle 22 étant disposée dans ladite gorge pour former butée inférieure.

Selon la réalisation représentée en figure 3, la collerette 11 est pourvue d'une saillie 23 de préhension, ladite saillie permettant un démontage aisé du panneau 2.

Selon toutes les réalisations représentées, la zone d'ancrage 13 est sous forme d'une rainure circulaire, la zone d'ancrage réciproque 17 étant sous forme d'une nervure circulaire.

On décrit à présent un écran de protection acoustique comprenant un panneau 2 et au moins un dispositif 1, ledit dispositif étant solidarisé audit panneau, ledit dispositif étant destiné à être ancré au moteur du véhicule par une tige 5 solidaire dudit moteur.

Selon une réalisation, le panneau 2 est à base de feutre de verre comprimé à chaud pourvu d'un liant.

Selon une autre réalisation, le panneau 2 est à base de mousse, notamment de polyuréthanne.

De façon non représentée, le panneau 2 peut être pourvu, sur au moins une de ses faces 3,4, d'une feuille d'aluminium de protection thermique.

## Revendications

1. Dispositif (1) de fixation d'un panneau (2) de protection acoustique sur un moteur de véhicule automobile, ledit panneau présentant une face supérieure (3) et une face inférieure (4), ledit moteur étant solidaire d'une tige (5) verticale saillant vers le haut d'ancrage dudit dispositif, l'extrémité libre de ladite tige présentant un embout (6) de réception dudit dispositif, ledit dispositif comprenant :
• un embouti (7) réalisé dans l'épaisseur dudit panneau du côté de ladite face supérieure de manière à réduire localement son épaisseur, ledit embouti s'inscrivant sensiblement dans l'épaisseur générale dudit panneau de façon à ne pas créer de bossage du côté de ladite face inférieure, le fond dudit embouti étant pourvu d'un orifice (8),
• un plot (9) élastique de découplage comprenant un tronc (10) vertical de section horizontale inférieure à celle dudit embouti au niveau de ladite face supérieure, l'extrémité supérieure dudit plot étant pourvue d'une collerette (11) de masquage disposée sensiblement en continuité avec ladite face supérieure de façon à masquer ledit embouti, l'extrémité inférieure dudit plot étant pourvue d'un logement (12) agencé pour pouvoir recevoir ledit embout en emboîtement, ledit tronc comprenant une zone d'ancrage (13) par rapport audit panneau,
• une pièce (14) de rigidification en matériau thermoplastique moulé, ladite pièce comprenant une partie tubulaire (15) logeant une zone inférieure (16) dudit tronc et saillante dudit panneau vers le bas, de manière à écarter ledit logement dudit panneau, l'intérieur de ladite partie tubulaire comprenant une zone d'ancrage réciproque (17) coopérant en emboîtement avec ladite zone d'ancrage pour ancrer ledit plot sur ladite pièce, l'extérieur de ladite partie tubulaire comprenant une zone d'emboitement (18) sur la périphérie dudit orifice.

2. Dispositif selon la revendication 1, **caractérisé en ce qu'**il comprend en outre un moyen de soutien (19) de la collerette (11) destiné à éviter son affaissement dans l'embouti (7).

3. Dispositif selon la revendication 2, **caractérisé en ce que** le moyen de soutien (19) est intégré à la pièce (14) de rigidification, étant notamment sous la forme d'un conduit élargi prolongeant le haut de la partie tubulaire (15) pour venir en contact avec la collerette (11).

4. Dispositif selon la revendication 2, **caractérisé en ce que** le moyen de soutien (19) est intégré au plot (9), étant notamment sous la forme de nervures verticales s'étendant en dessous de la collerette (11) pour prendre appui sur la pièce (14) de rigidification.

5. Dispositif selon l'une quelconque des revendications 1 à 4, **caractérisé en ce que** la zone d'emboitement (18) est sous forme d'une rainure circulaire recevant la périphérie dudit orifice.

6. Dispositif selon l'une quelconque des revendications 1 à 4, **caractérisé en ce que** la zone d'emboitement (18) est sous forme d'une surface d'appui de la périphérie de l'orifice (8) surmontée par une butée supérieure (20), la partie tubulaire (15) étant pourvue d'une gorge (21) périphérique, une rondelle (22) étant disposée dans ladite gorge pour former butée inférieure.

7. Dispositif selon l'une quelconque des revendications 1 à 6, **caractérisé en ce que** la collerette (11) est pourvue d'une saillie (23) de préhension.

8. Dispositif selon l'une quelconque des revendications 1 à 7, **caractérisé en ce que** la zone d'ancrage (13) est sous forme d'une rainure circulaire, la zone d'ancrage réciproque (17) étant sous forme d'une nervure circulaire.

9. Ecran de protection acoustique comprenant un panneau (2) et au moins un dispositif selon l'une quelconque des revendications 1 à 8, ledit dispositif étant solidarisé audit panneau, ledit dispositif étant destiné à être ancré au moteur du véhicule par une tige (5) solidaire dudit moteur.

10. Ecran selon la revendication 9, **caractérisé en ce que** le panneau (2) est à base de feutre de verre comprimé à chaud pourvu d'un liant ou à base de mousse, notamment de polyuréthanne.
